# EUROPÄISCHE PATENTSCHRIFT

(11) **EP 1 127 724 B1**
(45) Veröffentlichungstag und Bekanntmachung des Hinweises auf die Patenterteilung: **03.05.2006**
(21) Anmeldenummer: 01102206.8
(22) Anmeldetag: 31.01.2001
(51) Int. Cl.: B60J 7/057

(54) **Verfahren zur Überbrückung partieller Schwergängigkeit an verfahrbaren Flächen**
Method for overcoming partial stiffness of movable plates
Méthode pour surmonter une dureté partielle de panneaux mobiles

(30) Priorität: 22.02.2000 DE 10008040
(43) Veröffentlichungstag der Anmeldung: 29.08.2001
(73) Patentinhaber: ROBERT BOSCH GMBH, 70442 Stuttgart (DE)
(72) Erfinder: Lamm, Hubert, 77876 Kappelrodeck (DE)

(56) Entgegenhaltungen:
- EP-A- 0 479 045
- EP-A- 0 900 679
- DE-A- 19 619 971

## Beschreibung

### Technisches Gebiet:

Die Erfindung bezieht sich auf ein Verfahren zur Überwachung partieller Schwergängigkeiten an verfahrbaren Flächen, wie beispielsweise Fensterscheiben oder Schiebedächern. Diese im Kraftfahrzeug vorgesehenen Bauteile werden in zunehmenden Maße mit elektrischen Antrieben ausgerüstet, die eine Fernbedienung dieser Flächen gestatten. Schwergängigkeiten treten auf, wenn beispielsweise Schiebedächern vorgeordnete Windabweiser bei Erhöhung der Fahrgeschwindigkeit einem erhöhten Luftwiderstand ausgesetzt sind und in dieser Situation eine Betätigung eines Schiebedaches erfolgt.

### Stand der Technik:

Bei bisherigen Ausführungsformen elektrischer Antriebe zur Betätigung von Fensterflächen oder Schiebedächern waren manuelle Überbrückungsfunktionen vorgesehen, mit denen an einer Schwergängigkeitsstelle angelangte angetriebene verschiebbare Flächen per Hand über die Schwergängigkeitsstelle bewegt wurden. Ein manueller Eingriff des Bedieners lenkt diesen beim Führen eines Kraftfahrzeuges ab und kann zu kritischen Fahrsituationen führen, in denen der Fahrer dem Verkehr nicht seine ungeteilte Aufmerksamkeit widmen kann.

Bei anderen Varianten von Fensterscheiben oder von Schiebedächern bewegenden Systemen sind Referenzläufe vorgesehen. Die Referenzläufe belasten den elektrischen Antrieb unnötigerweise, da sie lediglich eine Kalibrierfunktion haben. Referenzläufe sind darüber hinaus zeitaufwendig und während der Referenzläufe treten längst nicht alle jene Bedingungen ein, die später bei Betrieb der Fensterscheiben bzw. der Schiebedächer auftreten können.

### Darstellung der Erfindung:

Mit der erfindungsgemäßen Lösung wird eine automatische Überbrückungsfunktion angewendet, um den Drehzahlverlauf anzupassen. Die automatisch arbeitende Steuerung sorgt dafür, daß nur in dem schmalen eingegrenzten Bereich der Übergangsstelle, die als solche identifiziert ist, die Auslösekraft um einen gewissen Betrag erhöht wird. Wenn eine einmalige Erhöhung der Auslösekraft um einen bestimmten Betrag nicht ausreichend ist, um die Schwergängigkeitsstelle zu überwinden, wird diese durch die automatische Überbrückungsfunktion schrittweise in mehreren Anlaufroutinen bis zu einem Maximalwert erhöht. Ist mit einer unterhalb der maximalen Auslösekraft liegenden Auslösekraft die Überwindung der Schwergängigkeitsstelle erfolgt, so kann die zur Überwindung des Hindernisses erforderliche Auslösekraft in einer adaptiven Speichereinheit gespeichert werden. Der Maximalwert der Auslösekraft kann an der automatischen Überbrückungsfunktion voreingestellt werden, so daß je nach Anwendungsfall bestimmte maximale Auslösekräfte vorgesehen bzw. zugelassen werden können. Auch die Schrittweiten, mit der sich die Auslösekraft stufenweise innerhalb der Anlaufroutine anheben läßt, kann variabel an der automatischen Überbrückungsfunktion vorgewählt werden.

Die stufenweise Erhöhung der Auslösekraft läßt sich beispielsweise in einem ersten Auffahren auf ein Hindernis mit anschließendem Reversieren des Antriebes einbetten. Liegt das Hindernis außerhalb des Bereiches, in dem die Schwergängigkeitsstelle lokalisiert ist, reversiert der Antrieb; liegt die Schwergängigkeitsstelle innerhalb des Wegfensters, wird die Auslösekraft nur für den Bereich, in dem die Schwergängigkeitsstelle liegt, erhöht. Nach mehrfachem Anfahren und Auflaufen auf das Hindernis kommt es zu einer stufenweisen Erhöhung der Auslösekraft im Bereich des Wegfensters, bis die maximal festgelegte Auslösekraft erreicht ist.

Wird das die Schwergängigkeitsstelle darstellende Hindernis schließlich ohne Reversieren des elektrischen Antriebes überwunden, kann sich die Drehzahladaption an die geänderten Verhältnisse anpassen, die das Hindernis gerade überwindende Auslösekraft, bzw. die Drehzahladaption kann in einem Speicher, der der automatischen Überbrückungsfunktion zugeordnet ist, abgelegt werden.

### Zeichnung:

Anhand der Zeichnung wird die Erfindung nachstehend näher erläutert.

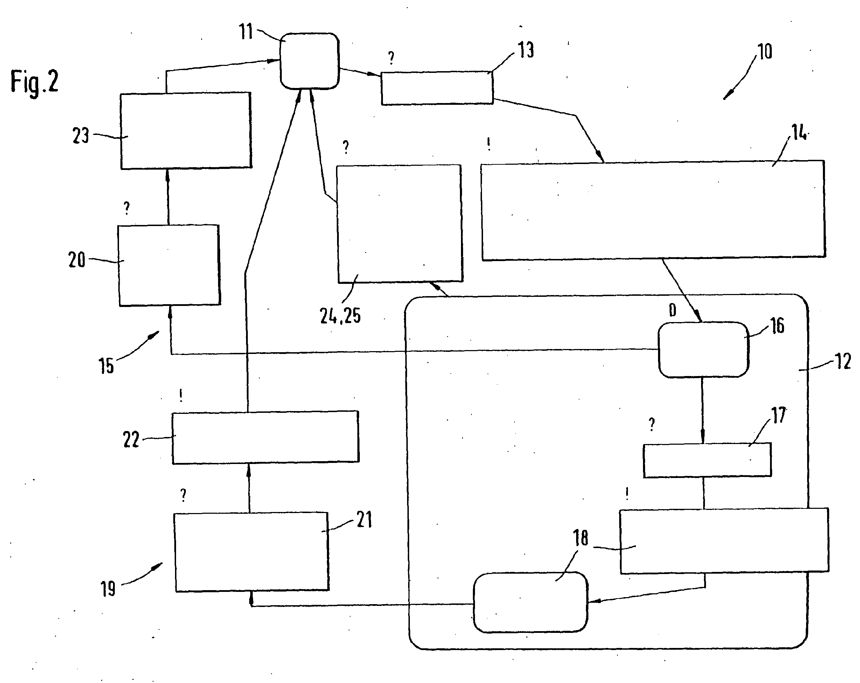

Es zeigt:
- Fig.: 1 den Drehzahlverlauf des elektrischen Antriebes mit einer zu überwindenden Schwergängigkeitsstelle
- Fig. 2: die Darstellung der Überbrückungsfunktion als Zustandsautomat.

### Ausführungsvarianten:

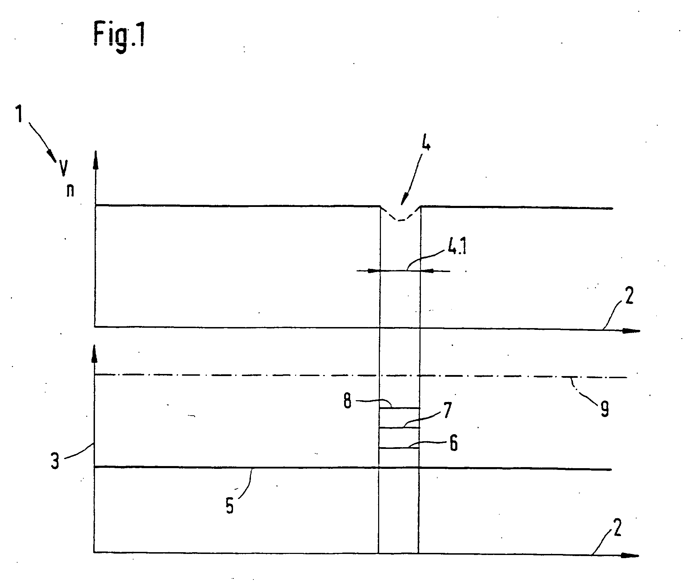

Die Darstellung gemäß Fig. 1 zeigt den Drehzahlverlauf des elektrischen Antriebes mit einer zu überwindenden Schwergängigkeitsstelle.

Aus der Darstellung gemäß Fig. 1 geht sowohl der sich einstellende Drehzahleinbruch am elektrischen Antrieb, als auch die durch die Passage eines Schwergängigkeitsbereiches 4.1 ausgelöste Auslösekrafterhöhung hervor. Im oberen in Fig. 1 enthaltenen Drehzahl/Wegdiagramm ist der Drehzahlverlauf 1 über dem Weg 2 aufgetragen. Im zu überwindenden Schwergängigkeitsbereich 4.1 tritt ein Drehzahleinbruch auf; nicht an einer diskreten Stelle des Verfahrweges 2, sondern sich über einen Verfahrwegbereich 4.1 erstreckend. Mittels der erfindungsgemäß vorgeschlagenen Vorgehensweise wird die Kraft, die zur Überwindung des Schwergängigkeitsbereiches 4.1 erforderlich ist, stufenweise gesteigert, bis die angetriebene zu verfahrende Fläche, beispielsweise eine Fensterscheibe oder ein Schiebedach den Schwergängigkeitsbereich 4.1 glatt passieren, ohne daß der elektrische Antrieb reversiert.

Im unteren Diagramm gemäß Fig.1 ist die Auslösekraft 3 über dem Weg 2 aufgetragen, wobei der im oberen Diagramm der Fig. 1 dargestellte Schwergängigkeitsbereich 4.1 in das untere Diagramm übertragen ist. Innerhalb des die automatische Überbrückungsfunktion auslösenden Schwergängigkeitsbereiches 4.1 erfolgt eine stufenweise Erhöhung der Auslösekraft, danach ein erneutes Anlaufen des Schwergängigkeitsbereiches 4.1 mit erhöhter Auslösekraft. Die Erhöhung der Auslösekraft findet ihre Begrenzung in dem gesetzten maximal zulässigen Wert der Auslösekraft, der an der automatischen Überbrückungsfunktion vorgegeben ist. Der maximale Wert für die Auslösekraft ist im unteren Diagramm gemäß Fig. 1 mit Bezugszeichen 9 identifiziert. Je nach vorgegebenen Auslösekrafterhöhüngsschritten werden die Anlaufroutinen 15, 19 (vergleiche Fig. 2) so oft durchlaufen, bis n notwendige Auslösekrafterhöhungsschritte abgearbeitet sind. In einem adaptiven Speichersystem läßt sich der vorgegebene Auslösekraftwert 5 durch denjenigen Wert für die Auslösekraft überschreiben, der die zu verfahrende Fläche gerade den Schwergängigkeitsbereich 4.1 überwinden läßt.

Die Drehzahl eines elektrischen Antriebes läßt sich so an partielle Schwergängigkeiten, wie sie beispielsweise bei Windabweisern an Schiebedächern auftreten können, anpassen. An die tatsächlichen Gegebenheiten adaptierte Drehzahlwerte lassen sich im Speichersystem ablegen.

Aus der Darstellung der Überbrückungsfunktion als Zustandsautomat gemäß Fig. 2 geht hervor, wie ausgehend von einem Start und Ziel, bzw. Endpunkt der Abarbeitung der automatischen Überbrückungsfunktionsroutine eine erste Einklemmabfrage 13 durchlaufen wird. Ist dieser Zustand der zu verfahrenden Fläche erkannt, wird die Position des Schwergängigkeitsbereiches 4.1 gespeichert, der Zeitbegrenzer gesetzt und der elektrische Antrieb reversiert. Dies erfolgt durch den Einklemmparameterspeicher 14, von dem aus in den im Zustandsautomaten 10 ebenfalls enthaltenden Überwachungsbaustein 12 verzweigt wird. Dort wird eine erste Klemmkrafterhöhung 16 herbeigeführt, die dann durch die Ansteuerung des elektrischen Antriebes innerhalb der ersten Anlaufroutine 15 auf die Fläche übertragen wird. Es wird überwacht, ob innerhalb der ersten Anlaufroutine 15 der Lauf des elektrischen Antriebes normal beendet wird, oder ob eine neue Einklemmsituation aufgetreten ist. Wird der Motorlauf normal beendet, wird die Erhöhung der Klemmkraft, die bei Position 16 im Überwachungsbaustein vorgenommen wurde, wieder zurückgenommen.

Ist hingegen innerhalb der ersten zu durchlaufenden Anlaufroutine 15 der Lauf des elektrischen Antriebes nicht normal beendet worden, ist eine neue Einklemmsituation aufgetreten. Die erneute Einklemmsituation wird durch eine nochmalige Abfrage 19 innerhalb des Überwachungsbausteines 12 verifiziert; die zweite Einklemmabfrage 17 mit positivem Resultat bewirkt eine nochmalige Klemmkrafterhöhung bei Position 18, so daß nunmehr nach erfolgloser Abarbeitung der ersten Anlaufroutine 15 die zweite Anlaufroutine 19 mit erhöhtem Wert für die aufzubringende Klemmkraft durchlaufen werden kann. Nach Erhöhung der Auslösekraft und Durchlaufen der zweiten Anlaufroutine 19 erfolgt eine Abprüfung 21 der Gestalt, ob der elektrische Antrieb seinen Lauf normal beendet hat, oder ob es erneut zu einer Einklemmsituation gekommen ist. Danach wird die nochmalige Klemmkrafterhöhung 18 zurückgenommen, bevor zum Start- bzw. Zielpunkt 11 verzweigt wird.

Neben den beiden Anlaufroutinen 15, 19, die mit unterschiedlich hohen Auslösekräften durchlaufen werden können, überwacht der Überwachungsbaustein 12, ob beispielsweise eine zuvor gesetzte Motorstillstandszeit von beispielsweise 10 Sekunden überschritten ist oder nicht. Ist dem so, wird ebenfalls an den Start- bzw. Zielabfragepunkt 11 verzweigt und die automatische Überbrückungsfunktion zurückgesetzt. Ein Zurücksetzen der automatischen Überbrückungsfunktion erfolgt ferner dann, wenn bei der Abfrage 25 der Ansteuerung des elektrischen Antriebes eine Drehrichtungsumkehr am elektrischen Antrieb aufgetreten ist. Bei Auftreten einer Verdrehrichtungsumkehr fährt die zufahrende Fläche - sei es eine Fensterscheibe oder ein Schiebedach - in ihre geöffnete Position zurück. Auch in der geschlossenen Position der jeweils zu verfahrenden Fläche ist die automatische Überbrückungsfunktion 10 zurückgesetzt.

Ein Ablauf der automatischen Überbrückungsfunktion gemäß des Diagramms nach Fig. 2 stellt sich etwa wie folgt dar:

Es erfolgt zunächst ein erstes Anfahren auf ein eine Schwergängigkeit erzeugendes Hindernis. Der die zu verfahrende Fläche antreibende elektrische Antrieb reversiert und fährt die Fläche aus dem Schwergängigkeitsbereich heraus, falls das Hindernis außerhalb des Schwergängigkeitsbereiches 4.1 liegen sollte.

Liegt das Hindernis innerhalb des Schwergängigkeitsbereiches 4.1, reversiert der elektrische Antrieb; mittels der automatischen Überbrückungsfunktion erfolgt eine Steigerung der Auslösekraft, die beispielsweise als F > 100 N liegt. Danach erfolgt ein erneuter Anlauf der zu verfahrenden Fläche in den Schwergängigkeitsbereich beim Durchlauf der ersten Anlaufroutine 15. Kommt es erneut zu einer Einklemmsituation, erfolgt durch Durchlauf der zweiten Anlaufroutine 19 ein zweiter Anlauf mit einer gestuften Erhöhung der Auslösekraft, um das Hindernis, den Schwergängigkeitsbereich 4.1 darstellend, zu überwinden. Diese Anläufe erfolgen mit jeweils gestufter Erhöhung der Auslösekraft so lange, bis die stufenweise gesteigerte Auslösekraft den vorgebbaren Maximalwert der Auslösekraft 9 (vergleiche Fig. 1) annimmt. Kann das Hindernis schließlich überwunden werden, wird die Auslösekraft abgespeichert und demjenigen Wegbereich 4.1 zugeordnet, an der sich der Schwergängigkeitsbereich 4.1 befunden hat. Auf diese Weise läßt sich ein an die zu überwindende Verfahrstrecke angepaßte Kraftschwelle für die Auslösekraft einstellen, so daß der die zu verfahrende Fläche antreibende elektrische Antrieb drehzahl und auslösekraftmäßig an den Schwergängigkeitsbereich 4.1 angepaßt ist und die zurückzulegenden Wegstreckenabschnitte 2 mit vorgegebener Auslösekraft 5 durchfährt und bei Detektion des zuvor abgespeicherten Schwergängigkeitsbereiches 4.1 der elektrische Antrieb mit einer gestuft erhöhten Auslösekraft betrieben wird.

### Bezugszeichenliste

- 1: Drehzahlverlauf
- 2: Wegverlauf
- 3: Kraftschwelle
- 4: Schwergängigkeitsstelle
- 4.1: Schwergängigkeitsbereich
- 5: vorgegebene Auslösekraft
- 6: erste Erhöhung der Auslösekraft
- 7: zweite Erhöhung der Auslösekraft
- 8: n-te Erhöhung der Auslösekraft
- 9: Maximalwert der Auslösekraft
- 10: Zustandsautomat
- 11: Start und Ziel
- 12: Überwachungsbaustein
- 13: erste Einklemmabfrage
- 14: Einklemmparameterspeicher
- 15: erste Anlaufroutine
- 16: Klemmkrafterhöhung
- 17: zweite Einklemmabfrage
- 18: nochmalige Krafterhöhung
- 19: zweite Anlaufroutine
- 20: erste Motorlaufabfrage
- 21: zweite Motorlaufabfrage
- 22: Rücksetzer
- 23: Rücksetzer
- 24: Zeitfensterüberwachungs-Abfrage
- 25: Drehrichtizngsumkehr Antrieb

## Patentansprüche

1. Verfahren zur Überbrückung partieller Schwergängigkeiten an verfahrbaren Flächen, wobei diese Flächen in Führungen aufgenommen sind und mittels elektrischer Antriebsmotoren verfahrbar sind, an deren Ansteuerung eine Überbrückungsfunktion vorgesehen ist, **dadurch gekennzeichnet, daß** mittels einer automatisch arbeitenden Steuerung (10) eine automatische Überwachungsfunktion geschaffen wird und daß innerhalb eines Schwergängigkeitsbereiches (4.1) die Auslösekraft in einem oder mehreren Schritten variiert wird.

2. Verfahren gemäß Anspruch 1, **dadurch gekennzeichnet, daß** durch die automatisch arbeitende Steuerung (10) eine Erhöhung der Auslösekraft an der Position des Schwergängigkeitsbereiches erzielt wird.

3. Verfahren gemäß Anspruch 1, **dadurch gekennzeichnet, daß** durch die automatische Steuerung (10) am elektrischen Antrieb der zu verfahrenden Fläche die Drehzahl verändert wird.

4. Verfahren gemäß Anspruch 1, **dadurch gekennzeichnet, daß** die automatisch arbeitende Steuerung (10) zur schrittweisen Erhöhung der Auslösekraft (16, 18) eine erste Anlaufroutine (15) sowie eine zweite Anlaufroutine (19) enthält.

5. Verfahren gemäß Anspruch 1, **dadurch gekennzeichnet, daß** an der automatischen Steuerung (10) eine Schließkraftbegrenzung (24, 25) vorgesehen ist.

6. Verfahren gemäß Anspruch 1, **dadurch gekennzeichnet, daß** der Überwachungsbaustein (12) zum Start- und Zielpunkt (11) zurückverzweigt, nach dem eine vorgebbare Zeitspanne verstrichen ist oder am elektrischen Antrieb eine Drehrichtungsumkehr eingetreten ist.

7. Verfahren gemäß Anspruch 4, **dadurch gekennzeichnet, daß** bei aufeinander folgenden Durchläufen der ersten Anlaufroutine (15) und der zweiten Anlaufroutine (19) pro Durchlauf die Auslösekraft bis zum Erreichen der gesetzten maximalen Auslösekraft gesteigert wird, wobei dieser den Schwergängigkeitsbereich (4.1) überwindende Wert in einem adaptiven Speicher abgelegt wird.

8. Verfahren gemäß Anspruch 1, **dadurch gekennzeichnet, daß** die automatische Überbrückungsfunktion zurückgesetzt wird, wenn die zu verfahrende Fläche ihre jeweilige Schließposition erreicht hat.

9. Verfahren gemäß Anspruch 1, **dadurch gekennzeichnet, daß** die automatische Überbrückungsfunktion zurückgesetzt wird, wenn die Stillstandszeit des elektrischen Antriebes eine vorgegebene Zeitspanne überschreitet.

10. Verfahren gemäß Anspruch 1, **dadurch gekennzeichnet, daß** die automatische Überbrückungsfunktion zurückgesetzt wird, wenn die Gegenrichtung des elektrischen Antriebes angesteuert wird.

## Claims

1. Method for overcoming partial running difficulties on moving surfaces, these surfaces being held in guides and being moved by means of electric drive motors whose actuation arrangement is provided with a overcoming function, **characterized in that** an automatic monitoring function is produced by means of an automatically operating control arrangement (10), and **in that** the triggering force is varied in one or more steps within an area of running difficulty. (4.1).

2. Method according to Claim 1, **characterized in that** the triggering force at the position of the area of running difficulty is increased by the automatically operating control arrangement (10).

3. Method according to Claim 1, **characterized in that** the rotational speed of the electric drive of the surface to be moved is changed by the automatic control arrangement (10).

4. Method according to Claim 1, **characterized in that** the automatically operating control arrangement (10) for increasing the triggering force (16, 18) in steps comprises a first run-up routine (15) and a second run-up routine (19).

5. Method according to Claim 1, **characterized in that** a closing force limiting arrangement (24, 25) is provided in the automatic control arrangement (10).

6. Method according to Claim 1, **characterized in that** the monitoring module (12) jumps back to the start and destination point (11) after a prespecified time period has elapsed or the direction of rotation of the electric drive is reversed.

7. Method according to Claim 4, **characterized in that**, with successive runs through the first run-up routine (15) and the second run-up routine (19) for each run, the triggering force is increased until the set maximum triggering force is reached, this value which overcomes the area of running difficulty (4.1) being stored in an adaptive memory.

8. Method according to Claim 1, **characterized in that** the automatic overcoming function is reset when the surface to be moved has reached its respective closed position.

9. Method according to Claim 1, **characterized in that** the automatic overcoming function is reset when the down time of the electric drive exceeds a prespecified time period.

10. Method according to Claim 1, **characterized in that** the automatic overcoming function is reset when the electric drive is driven in the opposite direction.

## Revendications

1. Procédé de dépassement de duretés partielles de fonctionnement de surfaces mobiles logées dans des guides et déplaçables au moyen de moteurs électriques d'entraînement, dont la commande prévoit une fonction de dépassement,
**caractérisé en ce qu'**
on crée une fonction de surveillance automatique au moyen d'une commande automatique (10), et on fait varier la force de dégagement en une ou plusieurs étapes à l'intérieur d'une zone de dureté de fonctionnement (4.1).

2. Procédé selon la revendication 1,
**caractérisé en ce que**
la commande automatique (10) augmente la force de dégagement à l'endroit de la zone de dureté de fonctionnement.

3. Procédé selon la revendication 1,
**caractérisé en ce que**
la commande automatique (10) modifie la vitesse de rotation de l'entraînement électrique des surfaces à déplacer.

4. Procédé selon la revendication 1,
**caractérisé en ce que**
la commande automatique (10) contient une première routine de démarrage (15) ainsi qu'une deuxième routine de démarrage (19) pour augmenter graduellement la force de dégagement (16, 18).

5. Procédé selon la revendication 1,
**caractérisé en ce que**
la commande automatique (10) limite la force de fermeture (24, 25).

6. Procédé selon la revendication 1,
**caractérisé en ce que**
le composant de surveillance (12) revient au point de départ et de destination (11) après un temps prédéterminé ou après une inversion du sens de rotation de l'entraînement électrique.

7. Procédé selon la revendication 4,
**caractérisé en ce que**
lors d'une exécution successive de la première routine de démarrage (15) et de la deuxième routine de démarrage (19), à chaque exécution, on augmente la force de dégagement jusqu'à atteindre la force de dégagement maximale fixée, et on mémorise cette valeur dépassant la zone de fonctionnement (4.1) dans une mémoire adaptative.

8. Procédé selon la revendication 1,
**caractérisé en ce qu'**
on remet à zéro la fonction automatique de dépassement, lorsque la surface à déplacer atteint sa position de fermeture respective.

9. Procédé selon la revendication 1,
**caractérisé en ce qu'**
on remet à zéro la fonction automatique de dépassement, si le temps d'arrêt de l'entraînement électrique dépasse un temps prédéterminé.

10. Procédé selon la revendication 1,
**caractérisé en ce qu'**
on remet à zéro la commande automatique de dépassement, lorsqu'on commande l'inversion du sens de rotation de l'entraînement électrique.
